# EUROPÄISCHE PATENTANMELDUNG

(11) **EP 1 757 853 A2**
(43) Veröffentlichungstag der Anmeldung: **28.02.2007**
(21) Anmeldenummer: 06015197.4
(22) Anmeldetag: 21.07.2006
(51) Int. Cl.: F16L 21/02, F16L 17/03

(54) **Steckmuffe**

(30) Priorität: 25.08.2005 DE 102005040394
(71) Anmelder: Zimmermann, Josef, 53894 Mechernich-Holzheim (DE)
(72) Erfinder: Zimmermann, Josef, 53894 Mechernich-Holzheim (DE)
(74) Vertreter: Castell, Klaus

(57) **Zusammenfassung**

Steckmuffe (4) mit einem Grundkörper (5), der in axialer Richtung beabstandet eine Aufnahmeseite (8) und eine Einsteckseite aufweist, wobei die Aufnahmeseite (8) eine innenliegende Dichtung (6) aufweist und die Einsteckseite eine außenliegende Dichtung (7) aufweist, die außenliegende Dichtung (7) zum Zusammenwirken mit einem Rohrdurchmesser ausgelegt ist, der gleich dem mit der innenliegenden Dichtung (6) zusammenwirkenden Rohrdurchmesser ist oder kleiner als dieser ist und zumindest eine Dichtung (6,7) aus einem anderen Material als der Grundkörper (5) ist, wobei die außenliegende Dichtung (7) in axialer Richtung unverschiebbar mit dem Grundkörper (5) verbunden ist.

## Beschreibung

Die Erfindung betrifft eine Steckmuffe mit einem Grundkörper, der in axialer Richtung beabstandet eine Aufnahmeseite und eine Einsteckseite aufweist, wobei die Aufnahmeseite eine innenliegende Dichtung aufweist und die Einsteckseite eine außenliegende Dichtung aufweist, die außenliegende Dichtung zum Zusammenwirken mit einem Rohrdurchmesser ausgelegt ist, der gleich dem mit der innenliegenden Dichtung zusammenwirkenden Rohrdurchmesser ist oder kleiner als dieser ist und zumindest eine Dichtung aus einem anderen Material als der Grundkörper ist.

Die Erfindung betrifft insbesondere ein Abwasseranschlussstück, womit ein Rohr im Boden oder Wandbereich an ein anderes Rohr ohne Muffe angeschlossen werden kann. Hierbei sollte es unrelevant sein, ob das weitere Rohr einen gleichgroßen oder einen größeren Durchmesser hat als das Rohr im Boden oder im Wandbereich.

Im Stand der Technik ist zum Anschluss eines Rohres an ein anderes immer eine Muffe erforderlich. Dies führt häufig zu Problemen, die zu zeitaufwändigen Arbeiten führen, wie z.B. Stemmen, Beibetonieren, Beimauern, Verputzen und Streichen. Bei der vorliegenden Steckmuffe handelt es sich nicht um einen WC-Anschlußstutzen, der im Sanitärhandel angeboten wird. (WC-Anschlußstutzen brauchen keine Druckanforderungen von 5 m Wassersäule erfüllen.)

Der Erfindung liegt daher die Aufgabe zu Grunde, eine Steckmuffe zu entwickeln, die diese zeitaufwändigen Arbeiten eliminiert und auf einfache Art und Weise einsetzbar ist.

Diese Aufgabe wird bei einer gattungsgemäßen Steckmuffe dadurch gelöst, dass die außenliegende Dichtung in axialer Richtung unverschiebbar mit dem Grundkörper verbunden ist.

Der spezielle Aufbau der erfindungsgemäßen Steckmuffe führt zu einem Abwasseranschlussstück, mit dem ein Rohr im Boden oder im Wandbereich an ein anderes Rohr angeschlossen werden kann und gleichzeitig die Druckanforderungen für Abwasserrohrleitungen erfüllt werden.

Die spezielle Anordnung der Dichtungen auf dem Grundkörper, die Materialwahl und die unverschiebbare Befestigung der außenliegenden Dichtung auf dem Grundkörper führen zu einem neuen Abwasseranschlussstück, das bisher nicht bereitgestellt worden ist und das Arbeiten mit Abwasserrohren erleichtert.

Bekannte Abwasseranschlussstücke sind ebenfalls aus einem Grundkörper und Dichtungen aufgebaut. Erst die erfindungsgemäße Merkmalskombination führt jedoch dazu, dass ein in der Praxis anwendbares einfach herzustellendes Abwasseranschlussstück bereitgestellt wurde, das die Druckanforderungen für Abwasserrohrleitungen erfüllt.

Eine bevorzugte Ausführungsvariante sieht vor, dass die außenliegende Dichtung in einer Nut aufgenommen ist. Die Nut führt dazu, dass die außenliegende Dichtung in axialer Richtung unverschiebbar mit dem Grundkörper verbunden ist, sie gibt der Dichtung Halt und sie kann dazu dienen, den Grundkörper zu verstärken. Darüber hinaus führt die Nut dazu, dass die Dichtung auf einfache Art und Weise auf dem Grundkörper anbringbar ist.

Vorteilhaft ist es, wenn die außenliegende Dichtung mit dem Grundkörper verklebt ist. Auch eine Verklebung führt dazu, dass die außenliegende Dichtung in axialer Richtung unverschiebbar mit dem Grundkörper verbunden ist. Die Verklebung bietet sich als Alternative oder zusätzlich zur Aufnahme in einer Nut an.

Insbesondere bei der Herstellung von größeren Stückzahlen bietet es sich an, die außenliegende Dichtung einstückig mit dem Grundkörper auszubilden. Moderne Herstellungsverfahren erlauben es, unterschiedliche Materialien auch in einem Spritzgussvorgang beim Kunststoffspritzverfahren zu verbinden und somit eine Steckmuffe herzustellen, die einen Grundkörper aus einem ersten Material und eine Dichtung aus einem anderen Material aufweist.

In der Praxis hat es sich bewärt, wenn die außenliegende Dichtung eine im Schnitt lippenförmige Außenkontur aufweist. Diese Außenkontur ermöglicht ein einfaches Verbinden der Steckmuffe mit einem Rohr, sie gewährleistet die Dichtheit und erschwert ein Entfernen der Steckmuffe aus dem Rohr.

Die vorteilhaften Varianten der Anbringung der außenliegenden Dichtung sind entsprechend auch bei der innenliegenden Dichtung anzuwenden. Somit ist es vorteilhaft, wenn die innenliegende Dichtung in einer Nut aufgenommen ist, einstückig mit dem Grundkörper ausgebildet ist und eine lippenförmige Außenkontur aufweist.

Ziel der Ausbildung der Dichtungen sollte es sein, dass die außenliegende und die innenliegende Dichtung die Druckanforderungen für Abwasserrohrleitungen erfüllen. Hierbei ist anzumerken, dass bei Abwasserrohrleitungen nur relativ geringe Druckanforderungen gestellt sind, da es sich hierbei um offene Systeme handelt, die nur im Hinblick auf die Dichtungen wirkende Wassersäule dicht halten müssen.

So wird vorzugsweise gefordert, dass die außenliegende und die innenliegende Dichtung für eine Abdichtung ausgelegt sind, die mindestens 5 m Wassersäule Dichtheit erzielt. In der Regel reichen jedoch schon Steckmuffen aus, die bei einer Wassersäule von etwa 0,5 bis 1 m Dichtheit erzielen.

Ein einfacher Aufbau der Steckmuffe sieht vor, dass sie dafür ausgebildet ist, ein Rohr im Boden oder Wandbereich an ein anderes Rohr mit gleichem Durchmesser anzuschließen. Die Steckmuffe kann jedoch auch Rohre unterschiedlicher Durchmesser miteinander verbinden. Hierzu sind der Grundkörper und die außenliegende und die innenliegende Dichtung zum Zusammenwirken mit unterschiedlichen Rohrdurchmessern anzupassen.

Insbesondere bei unterschiedlichen Rohrdurchmessern entsteht das Problem, dass die Steckmuffe versehentlich zu weit in das Rohr hineingesteckt wird oder ein weiteres Rohr zu weit in die Steckmuffe gesteckt wird. Um dies zu vermeiden wird vorgeschlagen, dass der Grundkörper an seiner Innenseite radial nach innen vorstehend eine das Einstecken eines Rohres begrenzende Kante aufweist.

Alternativ kann vorgesehen werden, dass der Grundkörper an seiner Außenseite radial nach außen vorstehend eine das Einstecken eines Rohres begrenzende Kante aufweist. Die begrenzende Kante kann als umlaufender Flansch ausgebildet sein. Es können jedoch auch auf andere Weise Anschläge gebildet werden, die ein Rutschen der Steckmuffe in ein Rohr oder eines Rohres in die Steckmuffe begrenzen.

Eine materialsparende und trotzdem stabile Ausführungsform einer Steckmuffe wird dadurch erzielt, dass der Grundkörper in axialer Richtung verlaufende Stege aufweist.

Um das Einführen eines Rohres in die Steckmuffe oder der Steckmuffe in eine Rohr zu erleichtern und insbesondere um eine fluchtende Ausrichtung der betroffenen Rohre zueinander zu erzielen, wird vorgeschlagen, dass der Grundkörper in axialer Richtung Führungen aufweist. Alternativ oder kumulativ kann der Grundkörper darüber hinaus in Umfangsrichtung Führungen aufweisen.

Ein vorteilhaftes Herstellungsverfahren sieht vor, dass zumindest der Grundkörper im Kunststoffspritzverfahren hergestellt ist. Die Formgebung der Steckmuffe ist hierzu als einfache rotationssymmetrische Form ausgelegt, die die Herstellung im Kunststoffspritzverfahren erleichtert. Die Dichtungen können entweder während des Kunststoffspritzverfahrens angespritzt werden oder als separate Teile hergestellt werden und anschließend in axialer Richtung unverschiebbar mit dem Grundkörper verbunden werden.

Ein Ausführungsbeispiel einer erfindungsgemäßen Steckmuffe ist in der Zeichnung dargestellt und wird im Folgenden näher erläutert.
Es zeigt
- Figur 1: in geschnittener Ansicht ein Abwasserrohr,
- Figur 2: in geschnittener Ansicht eine Steckmuffe,
- Figur 3: in geschnittener Ansicht ein in Bodenbereich einbetoniertes Rohrstück und
- Figur 4: in geschnittener Ansicht eine Steckmuffe größerer Aufnahmeseite und kleinerer Einsteckseite.

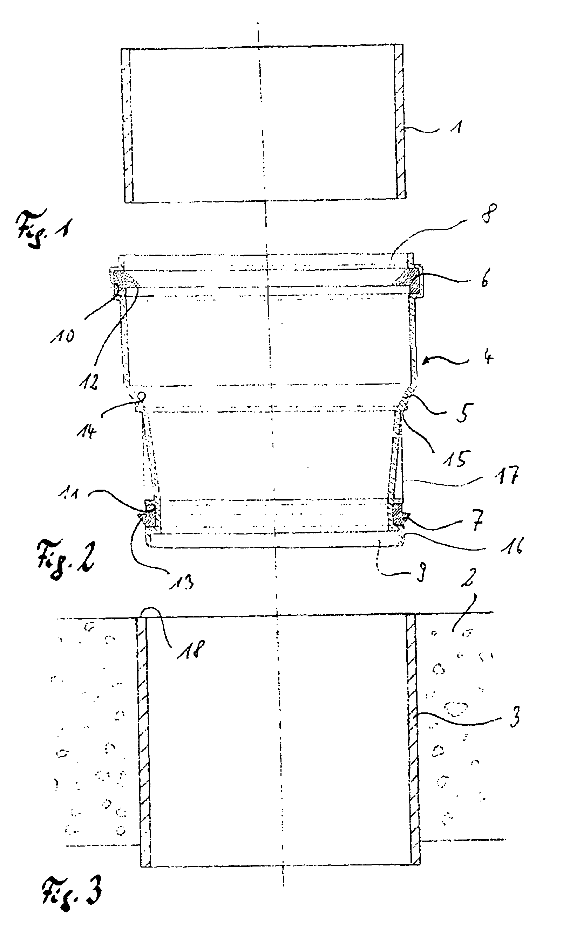

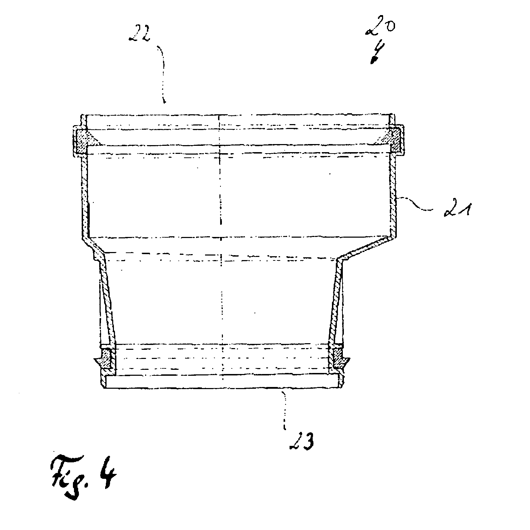

Um das in Figur 1 gezeigte Abwasserrohr 1 in das im Boden 2 einbetonierte Rohrstück 3 (vgl. Fig. 3) dicht einzusetzen, wird die in Figur 2 gezeigte Steckmuffe 4 verwendet. Diese Steckmuffe 4 besteht aus einem Grundkörper 5, einer innenliegenden Dichtung 6 und einer außenliegenden Dichtung 7. Das Ende mit der innenliegenden Dichtung 6 bildet die Aufnahmeseite 8, die so ausgebildet ist, dass das Rohr 1 an dieser Seite in die Steckmuffe 4 eingeschoben werden kann, wobei die innenliegende Dichtung 6 zwischen dem Grundkörper 5 der Steckmuffe 4 und dem Rohr 1 abdichtet.

Am anderen Ende der Steckmuffe 4 liegt die Einsteckseite 9, an der die außenliegende Dichtung 7 vorgesehen ist.

Der Grundkörper 5 der Steckmuffe 4 ist aus Kunststoff, wie beispielsweise Polypropylen (PP-Grau), hergestellt. Hierbei wird vorzugsweise PP-H verwendet, das nach DIN 4102 B 1 schwer entflammbar ist. Die Dichtungen sind aus einem elastomeren Material gefertigt und daher flexibler als der Grundkörper.

In dem in Figur 2 gezeigten Ausführungsbeispiel sind die innenliegende und die außenliegende Dichtung 6, 7 in einer Nut 10 bzw. 11 aufgenommen, wobei die Nut sicherstellt, dass die Dichtung in axialer Richtung unverschiebbar mit dem Grundkörper verbunden ist. Ein lippenförmiges Element 12 bzw. 13 steht von der Lippendichtung ab und über die Nut hervor. Diese lippenförmige Außenkontur wird beim Einschieben eines Rohrstücks 1 an der Aufnahmeseite 8 in die Steckmuffe 4 derart verformt, dass eine gute Abdichtung zwischen Steckmuffe 4 und Rohrstück 1 erzielt wird. In entsprechender Weise verformt sich die lippenförmige Außenkontur an der außenliegenden Lippendichtung 7 beim Einstecken der Steckmuffe 4 in ein Rohrstück 3, um auch für eine gute Abdichtung zu sorgen. Die Dichtungen sind dabei so geformt und mit dem Grundkörper 5 der Steckmuffe 4 verbunden, dass sie die Druckanforderung für Abwasserrohrleitungen erfüllen.

Das gezeigte Ausführungsbeispiel ist eine Steckmuffe 4, die ein erstes Rohrstück 1 mit einem zweiten Rohrstück 3 gleichen Durchmessers verbindet. Dem Fachmann ist jedoch aus der Abbildung ersichtlich, dass die Durchmesser an der Steckmuffe 4 leicht variiert werden können, um auch Rohrstücke unterschiedlicher Durchmesser miteinander zu verbinden.

Die Steckmuffe 4 hat an ihrer Innenseite eine schräge Kante 14, die das Einstecken des Rohrstücks 1 an der Aufnahmeseite 8 in die Steckmuffe begrenzt. In entsprechender Weise wird das Einstecken der Steckmuffe 4 in das Rohrstück 3 durch eine Kante 15 begrenzt. Beim Einstecken der Steckmuffe 4 in das Rohrstück 3 sorgt zunächst eine leicht angefaste, sich in Umfangsrichtung erstreckende Führung 16 für eine ordnungsgemäße Positionierung der Steckmuffe 4 relativ zum Rohrstück 3. Diese Führung 16 hat darüber hinaus die Funktion, eine Beschädigung der Dichtung 7 zu vermeiden. Sowie das Rohrstück 3 die Dichtung 7 passiert hat, wird die Steckmuffe 4 im Rohrstück 3 mittels den sich in axialer Richtung erstreckenden Führungen 17 fluchtend zum Rohrstück 3 gehalten. Die Steckmuffe 4 kann somit auf einfache Art und Weise soweit in das Rohrstück 3 gerade eingesteckt werden, bis der obere Rand 18 des Rohrstücks 3 an der Kante 15 des Grundkörpers 5 der Steckmuffe 4 anstößt.

In entsprechender Art und Weise kann auch das Rohrstück 1 beim Einstecken in die Steckmuffe 4 geführt werden, bis es an die Kante 14 anschlägt.

Die in Figur 4 gezeigte Steckmuffe 20 hat einen leicht modifizierten Grundkörper 21, bei dem die Aufnahmeseite 22 für das Zusammenwirken mit einem größeren Rohrdurchmesser (nicht gezeigt) als die Einsteckseite 23 ausgebildet ist.

## Patentansprüche

1. Steckmuffe mit einem Grundkörper, der in axialer Richtung beabstandet eine Aufnahmeseite und eine Einsteckseite aufweist, wobei die Aufnahmeseite eine innenliegende Dichtung aufweist und die Einsteckseite eine außenliegende Dichtung aufweist, die außenliegende Dichtung zum Zusammenwirken mit einem Rohrdurchmesser ausgelegt ist, der gleich dem mit der innenliegenden Dichtung zusammenwirkenden Rohrdurchmesser ist oder kleiner als dieser ist und zumindest eine Dichtung aus einem anderen Material als der Grundkörper ist, ***dadurch gekennzeichnet, dass*** die außenliegende Dichtung in axialer Richtung unverschiebbar mit dem Grundkörper verbunden ist.

2. Steckmuffe nach Anspruch 1, ***dadurch gekennzeichnet, dass*** die außenliegende Dichtung in einer Nut aufgenommen ist.

3. Steckmuffe nach einem der vorhergehenden Ansprüche, ***dadurch gekennzeichnet, dass*** die außenliegende Dichtung mit dem Grundkörper verklebt ist.

4. Steckmuffe nach einem der Ansprüche 1 oder 2, ***dadurch gekennzeichnet, dass*** die außenliegende Dichtung einstückig mit dem Grundkörper ausgebildet ist.

5. Steckmuffe nach einem der vorhergehenden Ansprüche, ***dadurch gekennzeichnet, dass*** die außenliegende Dichtung eine im Schnitt lippenförmige Außenkontur aufweist.

6. Steckmuffe nach einem der vorhergehenden Ansprüche, ***dadurch gekennzeichnet, dass*** die innenliegende Dichtung in einer Nut aufgenommen ist.

7. Steckmuffe nach einem der vorhergehenden Ansprüche, ***dadurch gekennzeichnet, dass*** die innenliegende Dichtung eine im Schnitt lippenförmige Außenkontur aufweist.

8. Steckmuffe nach einem der vorhergehenden Ansprüche, ***dadurch gekennzeichnet, dass*** die außenliegende und die innenliegende Dichtung die Druckanforderungen für Abwasserrohrleitungen erfüllen.

9. Steckmuffe nach einem der vorhergehenden Ansprüche, ***dadurch gekennzeichnet, dass*** die außenliegende und die innenliegende Dichtung für eine Abdichtung ausgelegt sind, die mindestens 5 m Wassersäule Dichtheit erzielt.

10. Steckmuffe nach einem der vorhergehenden Ansprüche, ***dadurch gekennzeichnet, dass*** der Grundkörper an seiner Innenseite radial nach innen vorstehend eine das Einstecken eines Rohres begrenzende Kante aufweist.

11. Steckmuffe nach einem der Ansprüche 1 bis 11, ***dadurch gekennzeichnet, dass*** der Grundkörper an seiner Außenseite radial nach außen vorstehend eine das Einstecken eines Rohres begrenzende Kante aufweist.

12. Steckmuffe nach einem der vorhergehenden Ansprüche, ***dadurch gekennzeichnet, dass*** der Grundkörper in axialer Richtung verlaufende Stege aufweist.

13. Steckmuffe nach einem der vorhergehenden Ansprüche, ***dadurch gekennzeichnet, dass*** der Grundkörper in axialer Richtung Führungen aufweist.

14. Steckmuffe nach einem der vorhergehenden Ansprüche, ***dadurch gekennzeichnet, dass*** der Grundkörper in Umfangrichtung Führungen aufweist.

15. Steckmuffe nach einem der vorhergehenden Ansprüche, ***dadurch gekennzeichnet, dass*** der Grundkörper im Kunststoffspritzverfahren hergestellt ist.
